# EUROPÄISCHE PATENTANMELDUNG

(11) **EP 4 819 560 A1**
(43) Veröffentlichungstag der Anmeldung: **07.10.2026**
(21) Anmeldenummer: 25168378.5
(22) Anmeldetag: 03.04.2025
(51) Int. Cl.: H04L 41/0631, H04L 41/069, H04L 41/142, H04L 43/0817

(54) **VERFAHREN, VORRICHTUNGEN, MOBILFUNKNETZWERK**

(71) Anmelder: Deutsche Telekom AG, 53113 Bonn (DE)
(72) Erfinder: SOBANIA, Alexander, 53757 Sankt Augustin (DE)
(74) Vertreter: 2SPL Patentanwälte PartG mbB

(57) **Zusammenfassung**

Die vorliegende Offenbarung betrifft ein Verfahren zur Bestimmung eines Netzwerkzustandes eines Mobilfunknetzwerks. Das Verfahren umfasst Erhalten von Netzwerk-Trace-Daten. Das Verfahren umfasst ferner Extrahieren, aus den Netzwerk-Trace-Daten, von wenigstens zwei Attributen. Das Verfahren umfasst ferner Erstellen eines Graphen aus den extrahierten Attributen. Der Graph umfasst wenigstens zwei Knoten und wenigstens eine Kante. Ein Knoten repräsentiert ein Attribut und eine Kante repräsentiert eine Abhängigkeit zwischen zwei Attributen repräsentiert. Das Verfahren umfasst ferner Auswerten des Graphen zur Bestimmung des Netzwerkzustandes.

## Beschreibung

### Technisches Gebiet

Die vorliegende Offenbarung betrifft ein Verfahren zur Bestimmung eines Netzwerkzustandes eines Mobilfunknetzwerks, eine Vorrichtung zur Bestimmung eines Netzwerkzustandes eines Mobilfunknetzwerks, ein Mobilfunknetzwerk, ein Verfahren zum Trainieren eines ML-Modells zum Erstellen eines Graphen, eine Vorrichtung zum Trainieren eines ML-Modells zum Erstellen eines Graphen, ein Verfahren zum Trainieren eines ML-Modells zum Auswerten eines Graphen, und eine Vorrichtung zum Trainieren eines ML-Modells zum Auswerten eines Graphen.

### Hintergrund

Mobilfunk- oder Telekommunikationsnetzwerke enthalten unterschiedliche Netzwerkelemente, die in komplexer Weise miteinander interagieren können. Beispielsweise kann ein Mobilfunknetzwerk (abgesehen von den Netzwerkteilnehmern) eine Vielzahl an Basisstationen, ein Kernnetzwerk, ein Transportnetzwerk, und dergleichen umfassen, die ferner eine Vielzahl von Unterelementen aufweisen, um drahtlose Kommunikation zu ermöglichen, indem sie Schnittstellen von unterschiedlichen Protokollen und Standards implementieren.

Allgemein gibt es einen Bedarf, eine verbesserte Netzwerkanalyse bereitzustellen.

### Zusammenfassung

Die vorliegende Offenbarung beruht auf der Erkenntnis, dass es in komplexen Netzwerken, wie zum Beispiel Mobilfunknetzwerken (ohne die vorliegende Offenbarung darauf zu beschränken) möglicherweise schwer zu verstehen ist, welche Auswirkungen Änderungen im Netzwerk nach sich ziehen können. Zum Beispiel kann eine Änderung an einem Load Balancer zu einem Ausfall des IP TVs führen. Während zwar jedes Netzwerkelement seinen Layer und seine direkte Umgebung testen kann, führt dies jedoch nicht notwendigerweise dazu, dass eine Ursache eines Netzwerkproblems zuverlässig identifiziert wird. Änderungen an einem Teil des Netzwerks können damit Auswirkungen auf das ganze Netzwerk haben und zu schwer vorhersehbaren Situationen führen.

Es wurde erkannt, dass Netzwerk-Trace-Daten verwendet werden können, um Graphen zu erstellen, die Abhängigkeiten im Netzwerk abbilden, da sie Informationen von verschiedenen Layern des Netzwerks aufweisen können.

Es wurde ferner erkannt, dass ein so erstellter Graph zur kausalen Inferenz verwendet werden kann, um komplexe Zusammenhänge im Netzwerk aufzudecken, ohne dass es notwendig ist, alle möglichen Szenarien zu testen.

Gemäß einem ersten Aspekt betrifft die vorliegende Offenbarung ein Verfahren zur Bestimmung eines Netzwerkzustandes eines Mobilfunknetzwerks. Das Verfahren umfasst Erhalten von Netzwerk-Trace-Daten. Das Verfahren umfasst ferner Extrahieren, aus den Netzwerk-Trace-Daten, von wenigstens zwei Attributen. Das Verfahren umfasst ferner Erstellen eines Graphen aus den extrahierten Attributen. Der Graph umfasst wenigstens zwei Knoten und wenigstens eine Kante. Ein Knoten repräsentiert ein Attribut und eine Kante repräsentiert eine Abhängigkeit zwischen zwei Attributen repräsentiert. Das Verfahren umfasst ferner Auswerten des Graphen zur Bestimmung des Netzwerkzustandes.

Damit können wenigstens die oben genannten Effekte erreicht werden.

In manchen Ausführungsbeispielen wird das wenigstens eine Attribut basierend auf einem ML-Modell extrahiert.

Damit können abstrakte oder implizite Attribute verwendet werden.

In manchen Ausführungsbeispielen umfasst das wenigstens eine Attribut wenigstens eines aus der folgenden Gruppe:
- Quell-IP-Adresse
- Ziel-IP-Adresse
- verwendetes Protokoll
- Ports
- Zeitstempel
- Zeitintervalls
- Paketgröße

Damit können IP-Layer-Attribute verwendet werden, wobei gemäß der vorliegenden Offenbarung auch Attribute aus anderen Layern verwendet werden können.

In manchen Ausführungsbeispielen umfasst das Erstellen des Graphen Verwenden der extrahierten wenigstens zwei Attribute als Knoten. In solchen Ausführungsbeispielen umfasst das Erstellen des Graphen ferner Bestimmen der Abhängigkeiten zwischen den Knoten basierend auf kausaler Inferenz.

Damit können wenigstens die oben genannten Effekte erzielt werden.

In manchen Ausführungsbeispielen ist das ML-Modell dazu eingerichtet, die kausale Inferenz auszuführen.

Damit kann dasselbe ML-Modell verwendet werden, das bereits die Attribute extrahiert hat.

In manchen Ausführungsbeispielen ist der Graph ein gerichteter azyklischer Graph.

Damit können zyklische Abhängigkeiten vermieden werden, was den Graph exakter machen kann.

In manchen Ausführungsbeispielen wird der Graph basierend auf einem ML-Modell ausgewertet.

Damit kann ein spezialisiertes Graphen-ML-Modell verwendet werden.

In manchen Ausführungsbeispielen umfasst das ML-Modell ein Graph neuronales Netzwerk (GNN).

Damit können ähnliche Effekte erzielt werden.

In manchen Ausführungsbeispielen umfasst Netzwerkzustand wenigstens eines aus normal, überlastet, Anomalie und Fehler.

Damit kann der Netzwerkzustand entsprechend klassifiziert werden.

Gemäß einem zweiten Aspekt betrifft die vorliegende Offenbarung eine Vorrichtung zur Bestimmung eines Netzwerkzustandes eines Mobilfunknetzwerks. Die Vorrichtung umfasst eine Prozessierschaltung, die eingerichtet ist, das Verfahren nach dem ersten Aspekt oder nach einem der Ausführungsbeispiele auszuführen, die sich auf den ersten Aspekt beziehen.

Damit können die gleichen oder ähnliche Effekte erzielt werden, wie unter Bezugnahme auf den ersten Aspekt diskutiert wurde.

Gemäß einem dritten Aspekt betrifft die vorliegende Offenbarung ein Mobilfunknetzwerk umfassend eine Vorrichtung nach dem zweiten Aspekt.

Damit können die gleichen oder ähnliche Effekte erzielt werden, wie unter Bezugnahme auf den ersten Aspekt diskutiert wurde.

Gemäß einem vierten Aspekt betrifft die vorliegende Offenbarung ein Verfahren zum Trainieren eines ML-Modells zum Erstellen eines Graphen aus Netzwerk-Trace-Daten eines Mobilfunknetzwerks. Das Verfahren umfasst Eingeben von Training-Netzwerk-Trace-Daten in das ML-Modell. Das ML-Modell ist initial konfiguriert, Attribute des Mobilfunknetzwerks zu lernen. Das Verfahren umfasst ferner Optimieren des ML-Modells, um aus den Attributen Kantenwahrscheinlichkeiten zwischen den Attributen zu bestimmen. Das Verfahren umfasst ferner Anpassen von Gewichtungen des ML-Modells anhand eines Fehlermaßes, das auf einer Bewertung der durch das ML-Modell erlernten Struktur des Graphen basiert.

Damit kann ein ML-Modell erhalten werden, das einen Graphen gemäß der vorliegenden Offenbarung erstellt. Damit können die gleichen oder ähnliche Effekte erzielt werden, wie unter Bezugnahme auf den ersten Aspekt diskutiert wurde.

Gemäß einem fünften Aspekt betrifft die vorliegende Offenbarung eine Vorrichtung zum Trainieren eines ML-Modells. Die Vorrichtung umfasst eine Prozessierschaltung, die dazu eingerichtet ist, das Verfahren nach dem vierten Aspekt auszuführen.

Damit kann ein ML-Modell erhalten werden, das einen Graphen gemäß der vorliegenden Offenbarung erstellt. Damit können die gleichen oder ähnliche Effekte erzielt werden, wie unter Bezugnahme auf den ersten Aspekt diskutiert wurde.

Gemäß einem sechsten Aspekt betrifft die vorliegende Offenbarung ein Verfahren zum Trainieren eines ML-Modells zum Auswerten eines Graphen zur Bestimmung eines Netzwerkzustandes eines Mobilfunknetzwerks. Der Graph umfasst wenigstens zwei Knoten und wenigstens eine Kante. Ein Knoten repräsentiert ein Attribut und eine Kante repräsentiert eine Abhängigkeit zwischen zwei Attributen. Das Verfahren umfasst Eingeben einer Vielzahl von Trainings-Graphen. Das Verfahren umfasst ferner Bestimmen struktureller Merkmale der Trainings-Graphen. Das Verfahren umfasst ferner Anpassen von Gewichtungen des ML-Modells anhand eines Fehlermaßes, das einen Unterschied zwischen dem durch das ML-Modell bestimmten Netzwerkzustand und einem zugeordneten Zielwert angibt.

Damit kann ein ML-Modell erhalten werden, das einen Graphen gemäß der vorliegenden Offenbarung auswertet. Damit können die gleichen oder ähnliche Effekte erzielt werden, wie unter Bezugnahme auf den ersten Aspekt diskutiert wurde.

Gemäß einem siebten Aspekt betrifft die vorliegende Offenbarung eine Vorrichtung zum Trainieren eines ML-Modells. Die Vorrichtung umfasst eine Prozessierschaltung, die dazu eingerichtet ist, das Verfahren nach dem sechsten Aspekt auszuführen.

Damit kann ein ML-Modell erhalten werden, das einen Graphen gemäß der vorliegenden Offenbarung auswertet. Damit können die gleichen oder ähnliche Effekte erzielt werden, wie unter Bezugnahme auf den ersten Aspekt diskutiert wurde.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 zeigt ein Ablaufdiagramm eines Verfahrens zur Bestimmung eines Netzwerkzustands gemäß der vorliegenden Offenbarung;
Fig. 2 zeigt eine Blockdiagramm einer Vorrichtung zur Bestimmung eines Netzwerkzustands gemäß der vorliegenden Offenbarung;
Fig. 3 zeigt ein Blockdiagramm eines Mobilfunknetzwerks gemäß der vorliegenden Offenbarung;
Fig. 4 zeigt ein Ablaufdiagramm eines Verfahrens zum Trainieren eines ML-Modells zum Erstellen eines Graphen gemäß der vorliegenden Offenbarung;
Fig. 5 zeigt ein Blockdiagramm einer Vorrichtung zum Trainieren eines ML-Modells zum Erstellen eines Graphen gemäß der vorliegenden Offenbarung;
Fig. 6 zeigt ein Ablaufdiagramm eines Verfahrens zum Trainieren eines ML-Modells zum Auswerten eines Graphen gemäß der vorliegenden Offenbarung;
Fig. 7 zeigt ein Blockdiagramm einer Vorrichtung zum Trainieren eines ML-Modells zum Auswerten eines Graphen gemäß der vorliegenden Offenbarung;
Fig. 8 zeigt ein Ablaufdiagramm eines Verfahrens zum Erstellen eines Graphen gemäß der vorliegenden Offenbarung; und
Fig. 9 zeigt einen beispielhaften Graphen gemäß der vorliegenden Offenbarung.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

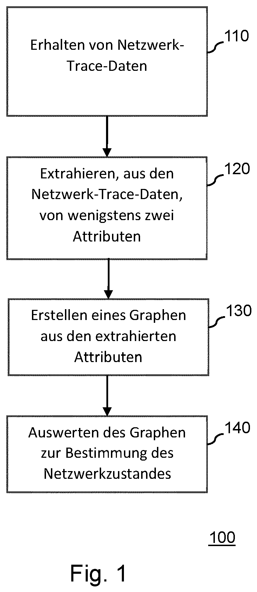

Fig. 1 zeigt ein Ablaufdiagramm eines Verfahrens 100 zur Bestimmung eines Netzwerkzustandes eines Mobilfunknetzwerks.

Ein Netzwerkzustand bezieht sich beispielsweise auf einen (technischen) Betriebszustand des Mobilfunknetzwerks, zu einem bestimmten Zeitpunkt oder in einem bestimmten Zeitraum. Der Netzwerkzustand kann sich aus der Zusammensetzung und dem Verhalten von Netzwerkelementen (oder Netzwerkknoten), Kommunikationsbeziehungen, Auslastungen, Verzögerungen, Fehlerereignissen oder anderen betrieblichen Kennzahlen ergeben. Der Netzwerkzustand kann dabei eine funktionale Integrität und Leistungsfähigkeit des Netzes oder einzelner Netzwerkelemente repräsentieren. Die Bewertung des Netzwerkzustands kann explizit oder implizit erfolgen, etwa durch Metriken wie Latenz, Durchsatz, Fehlerrate, Paketverlust, oder durch andere Attribute, wie hierin beschrieben. Ein Netzwerkzustand kann qualitativ klassifiziert werden, beispielsweise als "normal", "gestört", "überlastet" oder "fehlerhaft". Alternativ kann er quantitativ beschrieben werden, etwa durch numerische Scores oder Wahrscheinlichkeiten für spezifische Zustandsklassen.

Ein Mobilfunknetzwerk bezieht sich beispielsweise auf ein drahtloses Kommunikationsnetzwerk, das der Übertragung von Sprache, Daten und Signalisierungsinformationen zwischen mobilen Endpunkten (Endgeräten) dient. Es kann eine Vielzahl von Netzwerkelementen umfassen, wie zum Beispiel Basisstationen, Vermittlungseinrichtungen, Steuerungseinheiten, einem Kernnetzwerk, und dergleichen, die gemeinsam eine flächendeckende Funkversorgung ermöglichen. Allgemein kann ein Mobilfunknetzwerk unterschiedliche Netzwerkelemente mit unterschiedlichen Aufgaben umfassen. Beispielsweise bezieht sich ein Netzwerkelement auf eine physische oder virtuelle Komponente des Mobilfunknetzwerks, die eine vorbestimmte Netzwerkfunktion ausführt, wie etwa Datenvermittlung, Signalverarbeitung oder Steuerung. Beispiele für Netzwerkelemente sind Basisstationen, Router, Gateways, Netzwerkserver, virtuelle Netzwerkfunktionen (VNFs), Endgeräte, Transport-Netzwerk-Elemente, oder dergleichen.

Das Verfahren 100 umfasst ein Erhalten, 110, von Netzwerk-Trace-Daten. Netzwerk-Trace-Daten beziehen sich beispielsweise auf (aufgezeichnete) Informationen über Kommunikationsvorgänge in dem Mobilfunknetzwerk, wie zum Beispiel über den Austausch von Datenpaketen zwischen Netzwerkelementen. Sie können zeitlich aufgelöste Daten enthalten, die Rückschlüsse auf das Verhalten und den Zustand des Netzwerks erlauben. Netzwerk-Trace-Daten können während des laufenden Netzwerkbetriebs passiv aufgezeichnet oder aktiv durch Messmechanismen generiert werden. Netzwerk-Trace-Daten können für die Analyse, Diagnose und Optimierung von Netzwerkstrukturen und -prozessen verwendet werden. Die Struktur der Netzwerk-Trace-Daten kann sich an Netzwerkprotokollen orientieren und beispielsweise wenigstens eines aus Nutzdaten und Steuerungsdaten enthalten. Je nach Erhebungsmethode können Netzwerk-Trace-Daten einzelne Pakete, aggregierte Flows oder auch protokollspezifische Nachrichten abbilden. Netzwerk-Trace-Daten können beispielsweise Zeitstempel von gesendeten und empfangenen Paketen, Quell- und Ziel-IP-Adressen von Paketen, Protokolltypen (z. B. TCP, UDP), Paketgrößen, Portnummern, Round-Trip-Zeiten, Antwortzeiten, Log-Dateien, oder dergleichen repräsentieren oder umfassen. Die vorliegende Offenbarung ist jedoch nicht auf die Art oder Herkunft der Netzwerk-Trace-Daten beschränkt, solange die Netzwerk-Trace-Daten Rückschlüsse auf Kommunikationsvorgänge im Mobilfunknetzwerk zulassen.

Das Verfahren 100 umfasst ferner ein Extrahieren, 120, aus den Netzwerk-Trace-Daten, von wenigstens zwei Attributen. Die wenigstens zwei Attribute können sich auf die gleiche Datenstruktur oder auf unterschiedliche Datenstrukturen aus den Netzwerk-Trace-Daten beziehen, die in einer Abhängigkeit zueinanderstehen. Beispielsweise können die wenigstens zwei Attribute IP-Adressen von Netzwerkelementen sein oder ein Attribut ist eine IP-Adresse und ein anderes Attribut ist eine Netzwerkfunktion. Das Extrahieren von Attributen bezieht sich beispielsweise auf den Vorgang, bei dem aus den vorliegenden Trace-Daten strukturierte Merkmale (=Attribute) gewonnen werden, die charakteristische Eigenschaften oder Verhaltensmuster von Kommunikationsvorgängen im Netzwerk beschreiben. Diese Attribute können die Grundlage für eine graphenbasierte Modellierung des Netzwerks sein, bei der die Attribute als Knoten eines Abhängigkeitsgraphen verwendet werden. Die Extraktion kann explizit erfolgen, indem klar erkennbare Informationen, wie z. B. IP-Adressen, Ports oder Zeitstempel, aus den Netzwerk-Trace-Daten ausgelesen werden. Darüber hinaus können auch implizite Attribute extrahiert werden, die nicht direkt in den Daten enthalten sind, sondern durch Analyse- oder Lernverfahren erschlossen werden. Hierzu zählen etwa statistische Muster, zeitliche Korrelationen oder latente Repräsentationen, die durch ein maschinelles Lernen (ML) Modell aus den Netzwerk-Trace-Daten abgeleitet werden. Die Extraktion kann regelbasiert, heuristisch oder datengetrieben erfolgen, wobei bei datengetriebenen Verfahren das ML-Modell trainiert werden kann, um relevante Merkmale selbständig zu identifizieren. Die so gewonnenen Attribute können sowohl lokale Eigenschaften einzelner Datenflüsse als auch globale Zusammenhänge innerhalb des Netzwerks abbilden. Die Attribute sind dabei nicht auf syntaktische Felder der Trace-Daten beschränkt, sondern können auch semantische oder funktionale Aspekte der Netzkommunikation repräsentieren. Ziel der Attributextraktion kann dabei sein, eine abstrahierte, strukturierte Darstellung der Netzwerkaktivität zu ermöglichen, die für eine graphenbasierte Analyse geeignet ist.

Entsprechend kann ein Attribut ist eine abstrahierte, strukturierte Informationseinheit beschreiben, die aus den Netzwerk-Trace-Daten abgeleitet wird und eine bestimmte Eigenschaft, ein Merkmal oder ein Verhaltensmuster eines Netzwerkelements oder einer Kommunikationsbeziehung beschreibt.

Ein Abhängigkeitsgraph kann sich auf eine strukturierte Darstellung beziehen, in der Knoten einzelne Elemente (im vorliegenden Kontext Attribute aus Netzwerk-Trace-Daten) repräsentieren und Kanten die Abhängigkeiten oder Beziehungen zwischen diesen Knoten abbilden. Die Kanten können dabei gerichtete oder ungerichtete Verbindungen darstellen und können beispielsweise kausale, funktionale oder zeitliche Zusammenhänge ausdrücken. Der Graph kann damit zur Analyse komplexer Interaktionen innerhalb des Mobilfunknetzwerks verwendet werden, indem er verdeutlicht, wie einzelne Attribute einander beeinflussen oder voneinander abhängen. Ein solcher Graph kann die Grundlage für weiterführende Auswertungen bilden, wie zum Beispiel die Zustandsbestimmung, Anomalieerkennung, Ursachenanalyse, oder dergleichen im Mobilfunknetzwerk.

Das Verfahren 100 umfasst ferner ein Erstellen, 130, eines Graphen aus den extrahierten Attributen. Gemäß der vorliegenden Offenbarung kann der Graph wenigstens zwei Knoten (die zwei wenigstens zwei Attribute repräsentieren) und wenigstens eine Kante (die eine Abhängigkeit zwischen den zwei Knoten repräsentiert) umfassen. Das Erstellen des Graphen kann sich auf den Vorgang beziehen, bei dem aus einer Menge extrahierter Attribute (wenigstens zwei) ein strukturierter Abhängigkeitsgraph konstruiert wird. Die Kanten können auf vordefinierten Regeln, statistischen Korrelationen oder durch maschinelles Lernen ermittelten Zusammenhängen basieren, wie hierin beschrieben.

Das Verfahren 100 umfasst ferner ein Auswerten, 140, des Graphen zur Bestimmung des Netzwerkzustandes. Dies kann sich auf den Vorgang beziehen, bei dem aus der Struktur und den Eigenschaften des erstellten Graphen Rückschlüsse auf einen aktuellen oder zukünftigen Zustand des Mobilfunknetzwerks gezogen werden. Dabei wird der Graph, der Knoten (Attribute) und Kanten (Abhängigkeiten) enthält, analysiert, um Muster, Anomalien oder kritische Strukturen zu identifizieren, die auf den Netzwerkzustand hinweisen. Die Auswertung kann regelbasiert erfolgen, indem definierte Schwellenwerte, Topologien oder bekannte Signaturen im Graphen mit vorgegebenen Kriterien verglichen werden. Alternativ kann die Auswertung durch ein maschinelles Lernen (ML) Modell erfolgen, bspw. durch ein Graph Neuronales Netzwerk (GNN), das in der Lage ist, graphenbasierte Zusammenhänge zu erfassen und zu interpretieren. Ein solches Modell kann auf Trainingsdaten basieren, um typische Strukturen bestimmten Netzwerkzuständen wie "normal", "überlastet", "fehlerhaft", "Anomalie", oder dergleichen zuzuordnen. Während bei der regelbasierten Analyse vordefinierte (starre) Entscheidungsregeln Anwendung kommen können, kann ein ML-Modell gelernte Repräsentationen und Wahrscheinlichkeiten verwenden. Ziel der Auswertung kann dabei sein, den Netzwerkzustand automatisiert, zuverlässig und möglichst frühzeitig zu erkennen. Die Auswertung 140 kann dabei sowohl auf statischen Graphen als auch auf zeitlich fortlaufenden Graphenfolgen basieren. Zudem kann sie die Erkennung latenter, nicht direkt beobachtbarer Zustände durch die Analyse indirekter Abhängigkeitsmuster ermöglichen.

Wie oben erklärt kann das wenigstens eine Attribut basierend auf einem ML-Modell extrahiert werden. Wird sowohl für das Extrahieren der Attribute als auch zum Auswerten des Graphen ein ML-Modell verwendet, so können diese Schritte vom gleichen oder von zwei unterschiedlichen ML-Modellen ausgeführt werden. Ohne eine dahingehende Beschränkung zu verlangen, geht die nachfolgende Beschreibung davon aus, dass die Schritte von unterschiedlichen ML-Modellen ausgeführt werden. Das ML-Modell zum Extrahieren der Attribute wird nachfolgend als "erstes ML-Modell" und das ML-Modell zum Auswerten des Graphen wird nachfolgend als "zweites ML-Modell" bezeichnet.

Die Extraktion des Attributs basierend auf dem (ersten) ML-Modell kann einen datengetriebenen Prozess bezeichnen, bei dem relevante Merkmale/Attribute aus Netzwerk-Trace-Daten nicht durch manuelle Regeln, sondern durch das trainierte erste ML-Modell automatisch identifiziert und abstrahiert werden. Dabei können die Netzwerk-Trace-Daten in geeigneter Form aufbereitet werden (ohne die vorliegende Offenbarung darauf zu beschränken, denn auch Rohdaten können verwendet werden) und in das erste ML-Modell eingegeben werden. Das erste ML-Modell kann so konzipiert sein, dass es aus den Netzwerk-Trace-Daten latente Strukturen, Muster oder Korrelationen erkennt, die als Attribute interpretiert werden können. Solche Attribute sind nicht zwingend direkt in den Netzwerk-Trace-Daten vorhanden, sondern können sich aus der modellbasierten Analyse der Netzwerk-Trace-Daten ergeben.

Das erste ML-Modell basiert beispielsweise auf wenigstens eines aus einem Feedforward Neural Network (FNN), einem Convolutional Neural Network (CNN), einem Recurrent Neural Network (RNN), einem Long Short-Term Memory (LSTM)-Netzwerk, einem Transformer-Modell, oder dergleichen. Zusätzlich oder alternativ kann ein Autoencoder oder Variational Autoencoder (VAE) eingesetzt werden, wie zum Beispiel nichtüberwachten oder selbstüberwachten Extraktion latenter Repräsentationen. Bei sequenziellen oder zeitabhängigen Netzwerk-Trace-Daten können beispielsweise RNNs oder LSTMs verwendet werden, um zeitliche Abhängigkeiten zu erfassen. Für umfangreiche strukturierte Eingaben können beispielsweise Transformer-Modelle verwendet werden, die dazu eingerichtet sein können, kontextuelle Relationen zu modellieren. Die vorliegende Offenbarung ist jedoch nicht auf eine Art von ML-Modell beschränkt.

Das erste ML-Modell kann vor der Anwendung trainiert werden, wobei es mit einer Vielzahl von Trainings-Netzwerk-Trace-Daten konfrontiert werden kann, um daraus generalisierbare Merkmalsrepräsentationen zu lernen. Je nach Trainingsparadigma kann das Training überwacht, unüberwacht oder selbstüberwacht erfolgen. Beim überwachten Training kann das erste ML-Modell mit Datenpaaren aus Netzwerk-Trace-Daten und bekannten Ziel-Attributen trainiert werden. Beim unüberwachten Lernen kann das erste ML-Modell eigenständig häufige oder charakteristische Muster in den Netzwerk-Trace-Daten erkennen, ohne auf vorgegebene Labels angewiesen zu sein. Beim selbstüberwachten Lernen können beispielsweise Hilfsaufgaben (Pretext-Tasks) verwendet werden, wie zum Beispiel die Rekonstruktion von Maskierungen oder das Vorhersagen zeitlicher Reihenfolgen, um aussagekräftige Repräsentationen/Attribute zu lernen.

Die Trainings-Netzwerk-Trace-Daten können dabei wenigstens eines aus synthetischen Trainings-Netzwerk-Trace-Daten aus einem simulierten/modellierten Netzwerk oder aus einem Digital Twin eines echten Netzwerks, und reale Trainings-Netzwerk-Trace-Daten umfassen, die im Betrieb eines Mobilfunknetzwerks aufgezeichnet oder gemessen werden.

Das trainierte erste ML-Modell kann bei der Anwendung (Inferenz) neue (aktuelle und/oder historische) Netzwerk-Trace-Daten erhalten und daraus die wenigstens zwei Attribute erzeugen, bspw. als Attributvektor, Attributklassifikation, oder dergleichen, die dann als (strukturierte) wenigstens zwei Attribute weiterverwendet werden. Dabei kann das erste ML-Modell explizite Felder in den Trace-Daten (z. B. Header-Felder) nutzen, aber auch kombinierte, zusammengesetzte oder abstrahierte Informationen erzeugen. Solche modellbasiert extrahierten Attribute können beispielsweise typische Kommunikationsmuster, latente Cluster oder Zuordnungen zu funktionalen Einheiten im Netz sein. Entsprechend kann das erste ML-Modell bisher unbekannte, nicht manuell definierbare oder definierte Attribute extrahieren.

Durch die modellbasierte Extraktion kann eine hohe Flexibilität und Generalisierbarkeit erreicht werden, da das erste ML-Modell auf neue, veränderte Netzwerkkonfigurationen oder Kommunikationsmuster reagieren kann. Die Modellarchitektur, Hyperparameter und Trainingsdaten werden beispielsweise auf die Netzstruktur und die spezifischen Anforderungen des Mobilfunknetzwerks abgestimmt. Das erste ML-Modell kann regelmäßig nachtrainiert oder angepasst werden, um Veränderungen im Netzbetrieb oder neuen Bedrohungsszenarien Rechnung zu tragen. Zudem kann das erste ML-Modell auch mit weiteren Kl-Methoden (Kl: Künstliche Intelligenz), wie zum Beispiel zusätzlichen ML-Modellen, ergänzt werden, um Rückschlüsse auf die Bedeutung der extrahierten Attribute zu ermöglichen.

Zusätzlich oder alternativ zum Bestimmen der Korrelationen zwischen den Attributen, kann das erste ML-Modell dazu eingerichtet sein, eine kausale Inferenz zwischen Attributen zu bestimmen. Damit können, in manchen Ausführungsbeispielen, kausale Abhängigkeiten zwischen den Attributen identifiziert und als Kanten im Abhängigkeitsgraphen dargestellt werden. Kausale Inferenz kann sich hierbei darauf beziehen, dass das erste ML-Modell darauf trainiert oder konfiguriert ist, zwischen bloß gemeinsam auftretenden Ereignissen (Korrelation) und solchen, bei denen ein Attribut tatsächlich ursächlich auf ein anderes wirkt (Kausalität), zu unterscheiden. Um solche Kausalbeziehungen zu erkennen, kann das erste ML-Modell verschiedene statistische und algorithmische Techniken einsetzen, beispielsweise Granger-Kausalität, Strukturlerntechniken für Bayesische Netze, oder Causal Discovery-Methoden wie PC-Algorithmus, GES (Greedy Equivalence Search), NOTEARS, oder dergleichen.

Das erste ML-Modell kann dabei die zeitlichen und strukturellen Zusammenhänge in den Netzwerk-Trace-Daten analysieren und überprüfen, ob eine Änderung in einem Attribut systematisch eine Änderung in einem anderen Attribut bedingt. Dabei kann es sich beispielsweise um den Einfluss eines bestimmten Kommunikationsmusters auf die Netzwerklatenz oder um die Auswirkung eines Protokollwechsels auf die Paketverlustrate handeln. Solche inferierten Kausalbeziehungen können im Graphen als gerichtete Kanten modelliert werden, wobei die Richtung der Kante die vermutete Ursache-Wirkung-Beziehung widerspiegelt.

Beispielsweise kann bei drei Attributen A, B und C mit bekannten Kausalbeziehungen eine Kette, eine Gabel, oder ein Collider auftreten, wobei diese Beispiele nur zur Illustration dienen und die vorliegende Offenbarung nicht beschränken sollen:
Eine Kette kann wie folgt definiert werden: A → B → C - oder gesprochen: A beeinflusst C durch B.
Eine Gabel kann wie folgt definiert werden: A ← B → C - oder gesprochen: B ist ein Confounder, der A und C beeinflusst.
Ein Collider kann wie folgt definiert werden: A → B ← C - oder gesprochen: A und C sind unabhängig, beeinflussen aber B.

Das erste ML-Modell kann kausale Beziehungen sowohl auf Basis domänenspezifischer Annahmen als auch rein datenbasiert aus großen Mengen beobachteter Netzwerkdaten lernen. Die kausale Inferenz kann zudem durch neuronale Netzwerke unterstützt werden, etwa durch ein Causal Graph Neural Network, welches die Kausalstruktur direkt in der Modellarchitektur berücksichtigen kann. Die Verwendung kausaler Inferenz kann die Aussagekraft des Abhängigkeitsgraphen verbessern und eine robustere und erklärbarere Netzwerkanalyse ermöglichen, zum Beispiel bei der Identifikation von Fehlerursachen oder bei der Vorhersage von Auswirkungen einzelner Netzwerkereignisse.

Die vorliegende Offenbarung ist nicht darauf beschränkt, dass das erste ML-Modell die Kausalbeziehungen bestimmt. Beispielsweise kann dies auch vom zweiten ML-Modell, von wenigstens einem dritten ML-Modell, oder basierend auf einer Kombination des ersten und des zweiten ML-Modells bestimmt werden.

In manchen Ausführungsbeispielen ist der Graph ein gerichteter azyklischer Graph. Ein gerichteter azyklischer Graph (engl. Directed Acyclic Graph, DAG) kann sich auf eine Graphenstruktur beziehen, bei der die Kanten eine feste Richtung besitzen und keine zyklischen Verbindungen existieren (oder die Anzahl zyklischer Verbindungen unterhalb eines Schwellwerts liegt). Mit anderen Worten gibt es in einem solchen Fall keinen Pfad, der von einem Knoten ausgeht und (bspw. über mehrere Kanten) wieder zu diesem Knoten zurückführt. Gemäß der vorliegenden Offenbarung kann ein solcher Graph Abhängigkeitsbeziehungen zwischen Attributen modellieren, wobei die Richtung der Kante auf eine vermutete oder ermittelte Ursache-Wirkung-Beziehung hinweist. Der azyklische Charakter kann dabei sicherstellen, dass keine zirkulären Abhängigkeiten dargestellt werden, was zum Beispiel bei der kausalen Inferenz von Bedeutung sein kann (anders wäre ein Attribut indirekt seine eigene Ursache). Ein DAG kann sich daher zur Abbildung hierarchischer oder sequentieller Strukturen eignen, wie sie bei der Analyse von Netzwerkzuständen aus ursächlichen Zusammenhängen gemäß der vorliegenden Offenbarung auftreten können. Damit können Ursache-Wirkungs-Ketten im Mobilfunknetzwerk logisch nachvollziehbar und rechnerisch handhabbar dargestellt werden.

Wie oben bereits erwähnt kann der erstellte Graph regelbasiert oder basierend auf einem (zweiten) ML-Modell ausgewertet werden. Das zweite ML-Modell ist beispielsweise ein GNN. Ein GNN kann speziell dafür entwickelt sein, strukturierte Daten in Form von Graphen zu verarbeiten und auszuwerten. Ein GNN kann sich dabei auf ein neuronales Netzwerk beziehen, das die topologische Struktur des Graphen berücksichtigt und Informationen über Knoten, Kanten und deren Nachbarschaften aggregiert und verarbeitet. Im Gegensatz zu anderen neuronalen Netzen, die beispielsweise eindimensionalen oder tabellarischen Daten verwenden, kann ein GNN die lokalen und globalen Zusammenhänge zwischen den Knoten nutzen, um komplexe Beziehungen zu modellieren. Dabei kann das GNN in mehreren Schichten sogenannte Message Passing- oder Neighbourhood Aggregation-Operationen durchführen. In jeder Schicht kann die Repräsentation eines Knotens aktualisiert werden, indem Informationen von benachbarten Knoten und den zugehörigen Kanten gesammelt, gewichtet und kombiniert werden. Dieser Prozess kann es dem GNN erlauben, auch indirekte Zusammenhänge über mehrere Hops im Graphen hinweg zu erfassen. Zur Auswertung kann der gesamte Graph als Eingabe in das GNN gegeben werden. Das GNN kann daraufhin für jeden Knoten eine Einbettung (Embedding) (bspw. eine Vektorrepräsentation, die die semantische Rolle und den Kontext des Knotens im Graphen widerspiegelt) bestimmen. Je nach Architektur kann das GNN anschließend eine globale Klassifikation des gesamten Graphen durchführen (z. B. Bestimmung eines Netzwerkzustands für das ganze Netz), oder eine lokale Klassifikation einzelner Knoten (z. B. Identifikation problematischer Attribute oder Subsysteme, z. B. zur spezifischen Fehler- oder Anomaliebestimmung).

Das GNN kann in einem Trainingsverfahren (bspw. wie weiter unten beschrieben) anhand einer Vielzahl von Trainings-Graphen trainiert werden, die mit bekannten Netzwerkzuständen (Labels) annotiert sind, um überwachtes oder semi-überwachtes Training auszuführen. Dabei können die Gewichtungen des GNN so angepasst werden, dass es die richtigen Zustände möglichst zuverlässig aus den Graphenstrukturen ableiten kann. Die Optimierung kann dabei beispielsweise mittels Backpropagation und unter Verwendung eines geeigneten Fehlermaßes, z. B. einer Cross-Entropy-Loss-Funktion bei Klassifikationsaufgaben, ausgeführt werden.

Alternativ zum überwachten oder semi-überwachten Training, kann unüberwachtes Training des GNN ausgeführt werden. Beim unüberwachten Training des GNN kann das Lernen ohne explizit vorgegebene Zielwerte (Labels) für die Netzwerkzustände erfolgen. Stattdessen kann das GNN darauf trainiert werden, interne Repräsentationen zu lernen, welche die Struktur und Semantik des Graphen möglichst gut erfassen. Beispielsweise kann dafür ein Autoencoder-Ansatz gewählt werden, bei dem das GNN den Eingabegraphen (oder Teile davon, z. B. Knotenverbindungen) rekonstruieren soll. In solch einem Verfahren kann das Modell einen Encoder und einen Decoder umfassen. Der Encoder kann dazu eingerichtet sein, aus dem Eingabegraphen latente Repräsentationen der Knoten zu erzeugen, und der Decoder kann dazu eingerichtet aus, aus diesen Repräsentationen z. B. die Existenz von Kanten, Nachbarschaften oder Attributeigenschaften vorherzusagen. Als Lernziel kann ein Fehlermaß wie der Rekonstruktionsfehler oder ein Kontrastivverlust (z. B. InfoNCE-Loss) verwendet werden, der positive Knotenpaare (Knoten stehen in Beziehung) und negative Knotenpaare (Knoten stehen nicht in Beziehung) unterscheidet.

Durch das unüberwachte Training kann das GNN lernen, strukturell ähnliche Knoten oder Subgraphen zusammenzuführen und sinnvolle Merkmalsräume zu erzeugen - ohne dass vorher definiert wurde, was ein "normaler" oder "fehlerhafter" Zustand ist. Nach dem unüberwachten Training kann das GNN zur Clustering-basierten Anomalieerkennung, zur Feature-Extraktion für nachgelagerte Modelle, zur Semi-überwachten-Feinabstimmung auf kleine, gelabelte Datensätze, oder dergleichen genutzt werden.

Zur Verbesserung der Generalisierung kann das Training mit Techniken wie Dropout, Batch Normalization oder Graph Data Augmentation kombiniert werden. Unterschiedliche Varianten von GNNs können verwendet werden, wie z. B. ein Graph Convolutional Network (GCN), ein Graph Attention Network (GAT), ein Graph Isomorphism Network (GIN), oder dergleichen. Die Wahl des GNNs kann von Struktur und Dichte des zugrundeliegenden Abhängigkeitsgraphen erfolgen. Das trainierte GNN kann dann in der Lage sein, auch in unbekannten Graphen Muster zu erkennen, die auf spezifische Zustände hinweisen, selbst wenn diese nicht explizit zuvor aufgetreten sind.

Im Gegensatz zu anderen ML-Modellen kann ein GNN strukturübergreifend lernen, d.h. nicht nur auf Basis einzelner Merkmale, sondern unter Berücksichtigung der gesamten Netzwerktopologie. Dies kann eine robuste und kontextabhängige Zustandserkennung erlauben, zum Beispiel bei komplexen, verteilten Anomalien oder Fehlerketten im Mobilfunknetzwerk. Zusätzlich können GNNs auch mit anderen Kl-Ansätzen kombiniert werden, z. B. um hervorzuheben, welche Knoten oder Kanten besonders zum erkannten Zustand beigetragen haben.

Die Auswertung mittels des GNN kann somit eine skalierbare, datengetriebene und strukturadaptive Methode darstellen, um aus dem Graphen (in Echtzeit oder nahezu in Echtzeit) fundierte Aussagen über den Netzwerkzustand des Mobilfunknetzwerks abzuleiten.

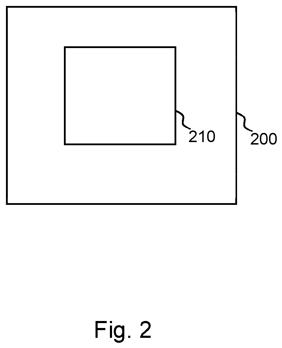

Fig. 2 zeigt eine Vorrichtung 200 zur Bestimmung eines Netzwerkzustandes eines Mobilfunknetzwerks. Die Vorrichtung umfasst eine Prozessierschaltung 210 umfasst, die eingerichtet ist, eines des hierin beschriebenen Verfahren (bspw. das Verfahren, das unter Bezugnahme auf Fig. 1 beschrieben wurde oder ein anderes Verfahren) auszuführen.

Die Prozessierschaltung 210 kann einen einzelnen dedizierten Prozessor umfassen, oder einen einzelnen gemeinsam genutzten Prozessor, oder eine Vielzahl von Einzelprozessoren, von denen einige oder alle gemeinsam genutzt werden können. In manchen Beispielen umfasst die Prozessierschaltung 210 (alternativ oder zusätzlich) wenigstens eines aus einem digitalen Signalprozessor (DSP), einer anwendungsspezifischen integrierten Schaltung (ASIC), einem System-on-a-Chip (SoC), einem neuromorphen Prozessor, und einem Field Programmable Gate Array (FPGA). Der Prozessierschaltung 210 kann optional z. B. mit einem Speicher wie einem Festwertspeicher (ROM - read only memory) zum Speichern von Software, einem Direktzugriffsspeicher (RAM - random access memory) und/oder mit einem nichtflüchtigen Speicher (oder Medium) gekoppelt sein oder einen Speicher umfassen, der so eingerichtet ist, dass er Befehle speichert, die, wenn sie von der Prozessierschaltung 210 ausgeführt werden, die Prozessierschaltung 210 veranlassen, eines oder mehrere der hier beschriebenen Schritte und Verfahren durchzuführen.

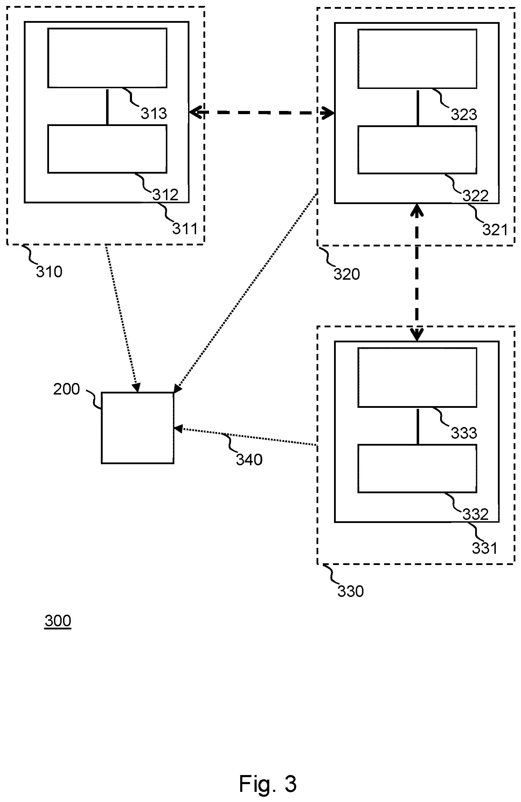

Fig. 3 zeigt ein Mobilfunknetzwerk 300, das die Vorrichtung 200 umfasst. Das Mobilfunknetzwerk 300 umfasst in diesem Beispiel ferner Netzwerkelemente (oder Netzwerkkomponenten) 310, 320 und 330, wobei die vorliegende Offenbarung nicht auf eine Art oder Anzahl der Netzwerkkomponenten beschränkt ist. Entsprechend sind die nachfolgenden Ausführungen nur beispielhaft zu verstehen.

Das Mobilfunknetzwerk 300 enthält optional ein Endgerät 310 (auch UE: User Equipment), eine Basisstation 320, und ein Kernnetzwerk (Core Network) 330, sodass in einigen Ausführungsformen ein aktives verteiltes Antennensystem (aDAS) gebildet wird.

Das UE 310 umfasst eine Schaltung 311 mit einer oder mehreren Schnittstellen 312, die zur Kommunikation im Mobilfunknetzwerk 300 eingerichtet sind. Die eine oder mehrere Schnittstellen 312 sind mit einer oder mehreren Prozessierschaltungen 313 gekoppelt, die beispielsweise und optional dazu eingerichtet sind, Netzwerk-Trace-Daten 340 zu übermitteln. Die vorliegende Offenbarung ist aber nicht darauf beschränkt, dass die Netzwerk-Trace-Daten 340 von den jeweiligen Elementen 310 bis 330 an die Vorrichtung 200 übermittelt werden. Beispielsweise kann die Vorrichtung die Netzwerk-Trace-Daten 340 auch von einer dafür extra vorgesehenen Vorrichtung erhalten.

Die Basisstation 320 umfasst eine Schaltung 321, welche eine oder mehrere Schnittstellen 322 enthält, die dazu eingerichtet sind, in dem Mobilfunknetzwerk zu kommunizieren. Die eine oder mehrere Schnittstellen 322 sind mit einer oder mehreren Prozessierschaltungen 323 gekoppelt, die dazu eingerichtet sind, die beispielsweise und optional dazu eingerichtet sind, Netzwerk-Trace-Daten 340 zu übermitteln.

Das Kernnetzwerk 330 umfasst eine Schaltung 331 mit einer oder mehreren Schnittstellen 332, die zur Kommunikation im Mobilfunknetzwerk eingerichtet sind. Die eine oder mehrere Schnittstellen 332 sind mit einer oder mehreren Prozessierschaltungen 333 gekoppelt, die beispielsweise und optional dazu eingerichtet sind, Netzwerk-Trace-Daten 340 zu übermitteln
Wie in Fig. 3 dargestellt, sind die jeweiligen Prozessierschaltungen 313, 323 und 333 mit den entsprechenden Schnittstellen 312, 322 und 332 gekoppelt. Die Schnittstellen 312, 322 und 332 können jeweils einem oder mehreren Ein- und/oder Ausgängen entsprechen, über die Informationen empfangen und/oder gesendet werden, wobei diese Informationen digitale (Bit-)Werte gemäß einem spezifizierten Code oder Protokoll innerhalb eines Moduls, zwischen Modulen oder zwischen Modulen unterschiedlicher Einheiten darstellen können. Eine Schnittstelle 312, 322 und/oder 332 kann beispielsweise eine Schnittstellenschaltung enthalten, die zum Empfangen und/oder Senden von Informationen/Daten eingerichtet ist. In Ausführungsbeispielen kann eine Schnittstelle 312, 322, 332 jegliche Mittel umfassen, um analoge oder digitale Signale bzw. Informationen zu erfassen, zu empfangen, zu senden oder bereitzustellen, beispielsweise einen Anschluss, Kontakt, Pin, Register, Eingangsport, Ausgangsport, Leiter, Leitung o. Ä., der das Senden oder Empfangen eines Signals oder einer Information ermöglicht. Eine Schnittstelle 312, 322, 332 kann für die drahtlose oder drahtgebundene Kommunikation eingerichtet sein und Signale oder Informationen mit weiteren internen oder externen Komponenten übertragen und/oder empfangen. Die Schnittstellen 312, 322, 332 können weitere Komponenten umfassen, die die Kommunikation in dem (mobilen) Kommunikationssystem oder -netzwerk 300 ermöglichen. Solche Komponenten können Sende-/Empfangseinheiten (Transceiver), einen oder mehrere Rauscharm-Verstärker (LNA), einen oder mehrere Leistungsverstärker (PA), einen oder mehrere Duplexer, Diplexer, Filter oder Filtersysteme, Wandler, Mischer sowie entsprechend angepasste Hochfrequenzkomponenten umfassen.

Die Prozessierschaltungen 313, 323, 333 können jeweils durch eine oder mehrere Verarbeitungseinheiten, Schaltungen oder beliebige Verarbeitungseinrichtungen realisiert sein, beispielsweise durch einen Prozessor, Computer, ein programmierbares Hardware-Bauelement, das mit entsprechend angepasster Software betrieben werden kann, oder dergleichen. Mit anderen Worten: Die beschriebene Funktion der Prozessierschaltungen 313, 323, 333 kann auch durch Software realisiert werden, die auf einem oder mehreren programmierbaren Hardwarekomponenten ausgeführt wird. Solche Hardwarekomponenten können z. B. einen Universalprozessor, einen digitalen Signalprozessor (DSP) oder einen Mikrocontroller umfassen.

Allgemein kann ein Netzwerkelement im festen oder stationären Teil des Netzes oder Systems angeordnet sein. Eine Netzwerkeinheit kann einem Remote-Radio-Head, einem Sendepunkt, Zugangspunkt, einer Makrozelle, Kleinzelle, Mikrozelle, Picozelle, Femtozelle oder Metrozelle entsprechen. Der Begriff Kleinzelle kann sich auf jede Zelle beziehen, die kleiner als eine Makrozelle ist, z. B. eine Mikro-, Pico-, Femto- oder Metrozelle. Eine Femtozelle wird als kleiner als eine Picozelle betrachtet, welche wiederum kleiner als eine Mikrozelle ist. Eine Netzwerkeinheit kann eine drahtlose Schnittstelle eines drahtgebundenen Netzwerks darstellen, die den Empfang und die Übertragung von Funksignalen zu einem Kommunikationsgerät ermöglicht. Ein solches Funksignal kann beispielsweise einem von 3GPP standardisierten Signal oder allgemein einem der oben genannten Systeme entsprechen. Somit kann eine Netzwerkeinheit oder eine Basisstation einer NodeB, eNodeB, gNodeB, einer BTS (Basisstationssendeeinheit) oder einem Zugangspunkt entsprechen.

Das Mobilfunknetzwerk 300 kann zellular aufgebaut sein. Der Begriff Zelle bezeichnet einen Versorgungsbereich für Funkdienste, der durch einen Sendepunkt, ein Remote-Modul, einen Remote-Head, einen Remote-Radio-Head, ein Kommunikationsgerät, eine Netzwerkeinheit oder eine NodeB, eNodeB oder gNodeB bereitgestellt wird. Die Begriffe Zelle und Basisstation können synonym verwendet werden; eine Basisstation 320 kann mehrere Zellen erzeugen. Ein drahtloses Kommunikationsgerät, z. B. das Kommunikationsgerät, kann bei mindestens einer Zelle (z. B. der Netzwerkeinheit) registriert oder mit dieser assoziiert sein, sodass ein Datenaustausch zwischen Netz und Endgerät im Versorgungsbereich der zugeordneten Zelle über einen dedizierten Kanal, eine Verbindung oder einen Link möglich ist.

Allgemein kann das UE 310 ein Gerät sein, das zur drahtlosen Kommunikation fähig ist. Insbesondere kann es sich um ein mobiles Kommunikationsgerät handeln, das vom Nutzer transportiert werden kann. Beispielsweise kann das UE 310 ein Mobiltelefon wie ein Smartphone oder ein anderes mobiles Kommunikationsgerät wie eine Smartwatch, ein Laptop, ein Tablet oder eine autonome AR-Brille sein. Das Kommunikationsgerät und die Netzwerkeinheit können dazu eingerichtet sein, in dem (zellulären) Mobilfunknetzwerk 300 zu kommunizieren, beispielsweise in einem Sub-6GHz-basierten zellularen System (mit Frequenzbändern zwischen 500 MHz und 6 GHz) oder einem mmWave-basierten System (mit Frequenzbändern zwischen 20 GHz und 60 GHz).

Allgemein kann das mobile Kommunikationssystem einem vom Third Generation Partnership Project (3GPP) standardisierten Netz entsprechen, wobei der Begriff mobiles Kommunikationssystem synonym zu mobilen Kommunikationsnetz verwendet wird. Das System kann beispielsweise ein 6G-, 5G-, New Radio (NR)-, Long-Term Evolution (LTE)-, LTE-Advanced (LTE-A)-, High Speed Packet Access (HSPA)-, Universal Mobile Telecommunications System (UMTS)- oder UMTS Terrestrial Radio Access Network (UTRAN)-Netz, ein evolved UTRAN (eUTRAN), ein GSM- oder EDGE-Netz, ein GSM/EDGE Radio Access Network (GE-RAN) oder ein mobiles Netz mit anderem Standard sein. Weitere Beispiele sind Netzwerke auf Basis von Orthogonal Frequency Division Multiple Access (OFDMA), Time Division Multiple Access (TDMA), Code Division Multiple Access (CDMA), Wideband-CDMA (WCDMA), Frequency Division Multiple Access (FDMA) oder Spatial Division Multiple Access (SDMA).

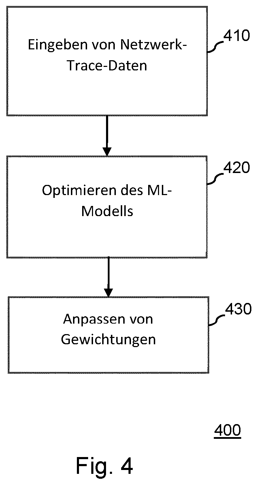

Fig. 4 zeigt ein Ablaufdiagramm eines Verfahrens 400 zum Trainieren eines maschinellen ML-Modells zum Erstellen eines Graphen aus Netzwerk-Trace Daten eines Mobilfunknetzwerks.

Um Wiederholungen zu vermeiden, wird an dieser Stelle auch auf die obigen Erklärungen verwiesen, die unter Bezugnahme auf die Fig. 1 gegeben wurden. Wie unter Bezugnahme auf die Fig. 1 wird das zu trainierende ML-Modell auch als "erstes ML-Modell" bezeichnet.

Das Verfahren 400 umfasst ein Eingeben, 410, von Training-Netzwerk-Trace-Daten in das erste ML-Modell, wobei das ML-Modell initial konfiguriert ist, Attribute des Mobilfunknetzwerks zu lernen.

Beispielsweise ist das erste ML-Modell zu Beginn des Trainingsprozesses so vorbereitet oder ausgestaltet ist, dass es in der Lage ist, aus den eingegebenen Netzwerk-Trace-Daten eigenständig relevante Attribute zu identifizieren oder zu generieren, die charakteristische Merkmale von Netzwerkelementen, Kommunikationsvorgängen oder Zuständen im Mobilfunknetzwerk darstellen. Beispielsweise ist das erste ML-Modell mit einer geeigneten Architektur, Eingabestruktur und gegebenenfalls Vorverarbeitungsschritten versehen, die es dem ersten ML-Modell erlauben, sowohl explizite als auch implizite Attribute zu extrahieren, wie hierin diskutiert. Das erste ML-Modell ist dabei beispielsweise nicht auf vordefinierte Merkmalslisten angewiesen, sondern kann datengetriebene Verfahren verwenden, um selbständig zu entscheiden, welche Merkmale für die graphenbasierte Modellierung von Relevanz sind. Die initiale Konfiguration kann die Wahl eines bestimmten neuronalen Netztyps (z. B. Autoencoder, Transformer, CNN, LSTM) und die Definition eines geeigneten Lernziels (z. B. Rekonstruktion, Ähnlichkeitsmaß, Kontrastivlernen) beinhalten. Damit wird beispielsweise sichergestellt, dass das erste ML-Modell fähig ist, aus unstrukturierten oder nur teilweise strukturierten Netzwerk-Trace-Daten eine interne Repräsentation zu erzeugen, die zur Konstruktion eines Abhängigkeitsgraphen genutzt werden kann. Das Ziel der initialen Konfiguration besteht beispielsweise darin, die Lernfähigkeit des ersten ML-Modells gezielt auf die Repräsentation netzwerkbezogener Eigenschaften auszurichten, ohne dabei eine manuelle Auswahl oder Filterung der Attribute vorauszusetzen.

Das Verfahren 400 umfasst ferner ein Optimieren, 420, des ML-Modells, um aus den Attributen Kantenwahrscheinlichkeiten zwischen den Attributen zu bestimmen. Hierbei kann das erste ML-Modell im Rahmen eines Trainingsprozesses so angepasst werden, dass es lernt, auf Basis der zuvor erlernten oder extrahierten Attribute Wahrscheinlichkeiten für das Vorhandensein von Kanten zwischen jeweils zwei Attributen zu berechnen. Die Kantenwahrscheinlichkeit kann dabei als Maß dafür dienen, wie wahrscheinlich es ist, dass zwei Attribute im Mobilfunknetzwerk funktional, kausal oder statistisch miteinander verbunden sind.

Zur Bestimmung dieser Wahrscheinlichkeiten kann das erste ML-Modell auf einer Architektur basieren, die beispielsweise eine Kombination aus Encoder- und Decoder-Komponenten beinhaltet, bei der Attribute zunächst in einen latenten Merkmalsraum eingebettet werden und anschließend eine Pairwise Scoring Function (z. B. ein Ähnlichkeitsmaß oder ein neuronales Vergleichsmodell) die Wahrscheinlichkeiten berechnet. Die Optimierung kann iterativ erfolgen, bspw. durch ein Gradientenverfahren, wobei das erste ML-Modell trainiert wird, möglichst zutreffende Vorhersagen über das Bestehen oder Nichtbestehen einer Kante zu treffen.

Das Ziel der Optimierung kann sein, dass das erste ML-Modell lernt, aus den erkannten Attributen eine aussagekräftige Graphenstruktur, bspw. in Form einer gewichteten Adjazenzmatrix zu erzeugen, wobei die Einträge einer solchen Matrix die Kantenwahrscheinlichkeiten zwischen den Attributen darstellen. Diese Wahrscheinlichkeit kann entweder als binäre Klassifikation (Kante vorhanden/nicht vorhanden) oder als kontinuierlicher Wert (z. B. zwischen 0 und 1) interpretiert werden. Die Optimierung kann auf Basis eines Lernziels erfolgen, das die Differenz zwischen der vorhergesagten Kantenstruktur und einer Referenzstruktur (sofern vorhanden) oder einer Rekonstruktionsvorgabe (im selbst-/unüberwachten Fall) minimiert.

Entsprechend umfasst das Verfahren ferner ein Anpassen, 430, von Gewichtungen des ersten ML-Modells anhand eines Fehlermaßes, das auf einer Bewertung der durch das erste ML-Modell erlernten Struktur des Graphen basiert. Hierbei können die internen Parameter bzw. Gewichtungen des ersten ML-Modells iterativ verändert werden, um dessen Fähigkeit zu verbessern, aus Attributen eine korrekte Graphenstruktur zu erzeugen. Die Anpassung erfolgt auf Grundlage eines Fehlermaßes, das berechnet wird, indem die vom ersten ML-Modell erlernte Struktur des erzeugten Graphen mit einer angestrebten Struktur verglichen wird - entweder mit einer bekannten Zielstruktur (im überwachten Fall) oder mit einem aus einem Lernziel abgeleiteten Kriterium (im selbstüberwachten oder unüberwachten Fall).

Die erlernte Struktur des Graphen umfasst beispielsweise die Knoten (Attribute) und die durch das erste ML-Modell vorhergesagten Kantenwahrscheinlichkeiten. Das Fehlermaß kann bewerten, inwieweit die erzeugte Graphstruktur von einer erwarteten, plausiblen oder tatsächlichen Struktur abweicht. Solche Fehlermaße können z. B. auf dem Vergleich von Adjazenzmatrizen, Kantenpräsenz (Precision/Recall), Rekonstruktionsfehlern oder kontrastiven Distanzen basieren. In einem überwachten Szenario kann das Fehlermaß z. B. eine Cross-Entropy-Funktion zwischen vorhergesagten Kanten und tatsächlichen Kanten sein. In einem unüberwachten Szenario kann das Fehlermaß z. B. den Unterschied zwischen dem Originalgraphen und einem durch das erste ML-Modell rekonstruierten Graphen messen. Auf Basis des Fehlermaßes kann das erste ML-Modell durch Optimierungsalgorithmen (z. B. Gradientenabstieg) angepasst werden, wobei die Gewichtungen in den Netzwerkschichten so verändert werden können, dass der Fehler in zukünftigen Durchläufen reduziert wird. Diese Gewichtungen können die Art und Weise steuern, wie das erste ML-Modell Informationen aus den Attributen verarbeitet und Kantenwahrscheinlichkeiten ableitet. Durch wiederholtes Anpassen in mehreren Trainingszyklen kann das erste ML-Modell so trainiert werden, dass es auch für neue Eingabedaten möglichst korrekte und sinnvolle Graphenstrukturen erzeugt. Das Fehlermaß kann dabei als zentrale Rückmeldung zur Leistungsbewertung des ersten ML-Modells wirken und als Grundlage für die lernbasierte Modelloptimierung dienen.

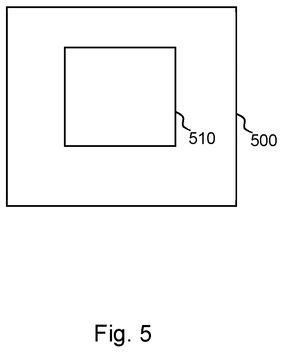

Fig. 5 zeigt eine Vorrichtung 500 zum Trainieren eines ML-Modells (des ersten ML-Modells). Die Vorrichtung 500 umfasst eine Prozessierschaltung 510, die dazu eingerichtet ist, das Verfahren 400 aus Fig. 4 auszuführen. Die Prozessierschaltung kann so ausgestaltet sein, wie unter Bezugnahme zur Fig. 2 oder 3 beschrieben, oder auf eine andere Art und Weise.

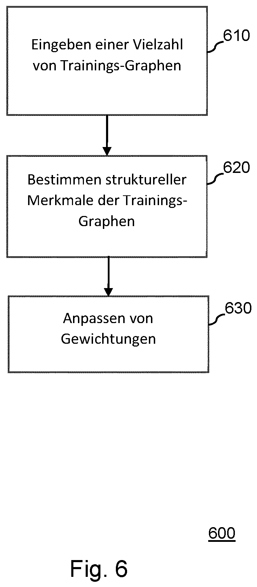

Fig. 6 zeigt ein Verfahren 600 zum Trainieren eines ML-Modells (des zweiten ML-Modells, bspw. ein GNN, wie hierin beschrieben) zum Auswerten eines Graphen zur Bestimmung eines Netzwerkzustandes eines Mobilfunknetzwerks.

Das Verfahren 600 umfasst ein Eingeben, 610, einer Vielzahl von Trainings-Graphen, wie bereits weiter oben beschrieben.

Das Verfahren 600 umfasst ferner ein Bestimmen, 620, struktureller Merkmale der Trainings-Graphen. Hierbei können aus den Trainings-Graphen charakteristische Eigenschaften extrahiert werden, die Rückschlüsse auf die zugrunde liegende Struktur und Dynamik der dargestellten Netzwerksituation ermöglichen. Die strukturellen Merkmale können sich auf topologische und inhaltliche Eigenschaften des Graphen, also auf die Art und Weise, wie die Knoten über Kanten miteinander verbunden sind. Zu den bestimmten strukturellen Merkmalen können beispielsweise die Knotenanzahl, Knotengrade (d. h. wie viele Verbindungen ein Knoten hat), Zentralitätsmaße, Pfadlängen, Clustering-Koeffizienten oder die Verteilung der Kantenwahrscheinlichkeiten gehören, ohne die vorliegende Offenbarung dahingehend zu beschränken. Darüber hinaus können auch komplexere, durch das zweite ML-Modell erlernte Repräsentationen (bspw. Embeddings) strukturelle Merkmale darstellen, die latente Zusammenhänge oder Kommunikationsmuster innerhalb des Graphen abbilden. Bei GNNs kann das Bestimmen dieser Merkmale durch einen mehrschichtigen Nachrichtenaustausch ("Message Passing") zwischen benachbarten Knoten erfolgen, bei dem beispielsweise lokale und globale Kontextinformationen schrittweise aggregiert werden. Damit können die Trainings-Graphen in eine Repräsentation überführt werden, die für eine anschließende Klassifikation, Bewertung oder Entscheidung - wie etwa die Bestimmung eines Netzwerkzustands - geeignet ist. Dabei werden beispielsweise nicht einzelne Knoten und Kanten isoliert betrachtet, sondern beispielsweise (auch) deren Einbettung in die Gesamttopologie des Graphen berücksichtigt. In diesem Schritt kann das zweite ML-Modell also seine Fähigkeit erwerben, verschiedene Graphen voneinander zu unterscheiden und daraus relevante Informationen für eine Zustandsbewertung abzuleiten.

Das Verfahren 600 umfasst ferner ein Anpassen, 630, von Gewichtungen des (zweiten) ML-Modells anhand eines Fehlermaßes, das einen Unterschied zwischen dem durch das (zweite) ML-Modell bestimmten Netzwerkzustand und einem zugeordneten Zielwert angibt. Zur Erklärung dieses Merkmals wird an dieser Stelle auf die Beschreibung zur Fig. 1 und/oder zur Fig. 4 verweisen.

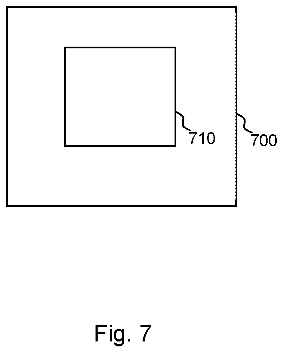

Fig. 7 zeigt eine Vorrichtung 700 zum Trainieren eines ML-Modells (des zweiten ML-Modells). Die Vorrichtung 700 umfasst eine Prozessierschaltung 710, die dazu eingerichtet ist, das Verfahren 600 aus Fig. 6 auszuführen. Die Prozessierschaltung kann so ausgestaltet sein, wie unter Bezugnahme zur Fig. 2 oder 3 beschrieben, oder auf eine andere Art und Weise.

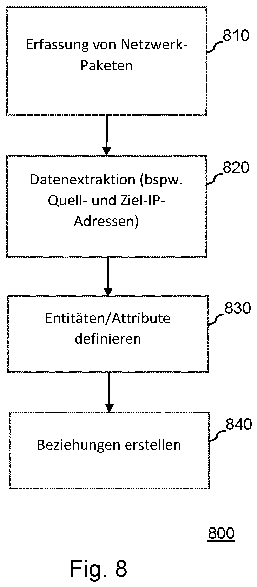

Fig. 8 zeigt ein Verfahren 800 zum Erstellen eines Graphen (auch bezeichnet als "Knowledge-Graph") gemäß der vorliegenden Offenbarung.

Gemäß der vorliegenden Offenbarung können die Netzwerkdaten in eine aussagekräftige und abfragbare Form gebracht werden. Dafür werden im Verfahren 800 zunächst die Netzwerkpakete erfasst, 810. Dies kann auf unterschiedliche Arten geschehen, wie bereits weiter oben beschrieben. Zusätzlich seien noch Tools wie Wireshark oder tcpdump genannt, die den Netzwerkverkehr aufzeichnen können. Aus den erfassten Paketen werden, in 820, Daten extrahiert, wie zum Beispiel, Quell- und Ziel-IP-Adressen, Protokolle (bspw. TCP, UDP, ICMP, oder dergleichen), Ports, Zeitstempel, Paketgrößen, und dergleichen. Zur Strukturierung des Graphen werden, in 830, zunächst Attribute (auch als Entitäten bezeichnet) extrahiert bzw. definiert. Beispielsweise können dafür IP-Adressen als Knoten und Protokolle und/oder Zeitintervalle als Eigenschaften von Verbindungen definiert werden. Danach werden Beziehungen (als Kanten des Graphen) erstellt 840, wie hierin beschrieben.

Die vorliegende Offenbarung ist jedoch nicht auf den IP-Layer beschränkt. Dieser dient nur als anschauliches Beispiel. Generell können die Prinzipien der vorliegenden Offenbarung auch auf andere Layer der Pakete angewendet werden, die über oder unter dem IP Layer liegen.

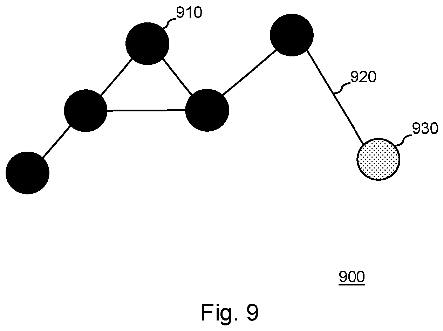

Ein Graph 900 eines Mobilfunknetzwerks ist in Fig. 9 dargestellt. Der Graph 900 enthält Knoten 910 und Kanten 920. In diesem Beispiel sind die Kanten nicht als gerichtete Kanten dargestellt. Wie hierin jedoch beschrieben können die Kanten gerichtet oder ungerichtet sein, d.h., ein Kausalzusammenhang kann erfasst werden, aber dies ist nicht unbedingt notwendig. Der Graph 900 zeigt ferner einen Knoten 930, der als fehlerhaft identifiziert wurde, indem der Graph 900 gemäß der vorliegenden Offenbarung analysiert wurde.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = applicationspecific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Verfahren (100) zur Bestimmung eines Netzwerkzustandes eines Mobilfunknetzwerks (300), das Verfahren (100) umfassend:
Erhalten (110) von Netzwerk-Trace-Daten (340);
Extrahieren (120), aus den Netzwerk-Trace-Daten (340), von wenigstens zwei Attributen;
Erstellen (130) eines Graphen (900) aus den extrahierten Attributen, wobei der Graph (900) wenigstens zwei Knoten (910; 930) und wenigstens eine Kante (920) umfasst, wobei ein Knoten (910; 930) ein Attribut repräsentiert, und wobei eine Kante (920) eine Abhängigkeit zwischen zwei Attributen repräsentiert; und
Auswerten (140) des Graphen (900) zur Bestimmung des Netzwerkzustandes.

2. Verfahren (100) nach Anspruch 1, wobei das wenigstens eine Attribut basierend auf einem maschinellen Lernen, ML, Modell extrahiert wird.

3. Verfahren (100) nach Anspruch 1 oder 2, wobei das wenigstens eine Attribut wenigstens eines aus der folgenden Gruppe umfasst:
- Quell-IP-Adresse
- Ziel-IP-Adresse
- verwendetes Protokoll
- Ports
- Zeitstempel
- Zeitintervalls
- Paketgröße

4. Verfahren (100) nach einem der Ansprüche 1 bis 3, wobei das Erstellen des Graphen (900) umfasst:
Verwenden der extrahierten wenigstens zwei Attribute als Knoten (910; 930); und
Bestimmen der Abhängigkeiten zwischen den Knoten (910; 930) basierend auf kausaler Inferenz.

5. Verfahren (100) nach Anspruch 4, wenn abhängig von Anspruch 2, wobei das ML-Modell dazu eingerichtet ist, die kausale Inferenz auszuführen.

6. Verfahren (100) nach einem der Ansprüche 1 bis 5, wobei der Graph (900) ein gerichteter azyklischer Graph ist.

7. Verfahren (100) nach einem der Ansprüche 1 bis 6, wobei der Graph (900) basierend auf einem maschinellen Lernen, ML, Modell ausgewertet wird.

8. Verfahren (100) nach Anspruch 7, wobei das ML-Modell ein Graph neuronales Netzwerk umfasst.

9. Verfahren (100) nach einem der Ansprüche 1 bis 8, wobei der Netzwerkzustand wenigstens eines aus normal, überlastet, Anomalie und Fehler umfasst.

10. Vorrichtung (200) zur Bestimmung eines Netzwerkzustandes eines Mobilfunknetzwerks (300), wobei die Vorrichtung (200) eine Prozessierschaltung (210) umfasst, die eingerichtet ist, das Verfahren (100) nach einem der Ansprüche 1 bis 9 auszuführen.

11. Mobilfunknetzwerk (300) umfassend eine Vorrichtung (200) nach Anspruch 10.

12. Verfahren (400) zum Trainieren eines maschinellen Lernen, ML, Modells zum Erstellen eines Graphen (900) aus Netzwerk-Trace-Daten (340) eines Mobilfunknetzwerks (300), das Verfahren (400) umfassend:
Eingeben (410) von Training-Netzwerk-Trace-Daten (340) in das ML-Modell, wobei das ML-Modell initial konfiguriert ist, Attribute des Mobilfunknetzwerks (300) zu lernen;
Optimieren (420) des ML-Modells, um aus den Attributen Kantenwahrscheinlichkeiten zwischen den Attributen zu bestimmen;
Anpassen (430) von Gewichtungen des ML-Modells anhand eines Fehlermaßes, das auf einer Bewertung der durch das ML-Modell erlernten Struktur des Graphen (900) basiert.

13. Vorrichtung (500) zum Trainieren eines ML-Modells, wobei die Vorrichtung (500) eine Prozessierschaltung (510) umfasst, die dazu eingerichtet ist, das Verfahren (400) nach Anspruch 12 auszuführen.

14. Verfahren (600) zum Trainieren eines maschinellen Lernen, ML, Modells zum Auswerten eines Graphen (900) zur Bestimmung eines Netzwerkzustandes eines Mobilfunknetzwerks (300), wobei der Graph (900) wenigstens zwei Knoten (910; 930) und wenigstens eine Kante (920) umfasst, wobei ein Knoten (910; 930) ein Attribut repräsentiert, und wobei eine Kante (920) eine Abhängigkeit zwischen zwei Attributen repräsentiert, das Verfahren (600) umfassend:
Eingeben (610) einer Vielzahl von Trainings-Graphen;
Bestimmen (620) struktureller Merkmale der Trainings-Graphen; und
Anpassen (630) von Gewichtungen des ML-Modells anhand eines Fehlermaßes, das einen Unterschied zwischen dem durch das ML-Modell bestimmten Netzwerkzustand und einem zugeordneten Zielwert angibt.

15. Vorrichtung (700) zum Trainieren eines ML-Modells, wobei die Vorrichtung (700) eine Prozessierschaltung (710) umfasst, die dazu eingerichtet ist, das Verfahren (600) nach Anspruch 14 auszuführen.
